# FASCICULE DE BREVET EUROPEEN

(11) **EP 1 138 727 B1**
(45) Date de publication et mention de la délivrance du brevet: **03.05.2006**
(21) Numéro de dépôt: 01400701.7
(22) Date de dépôt: 16.03.2001
(51) Int. Cl.: C09D 9/00

(54) **Composition décapante, utilisable notamment dans le domaine du bâtiment**
Abbeizmittel-Zusammensetzung zur Verwendung im Bausektor
Stripping composition useful in the field of building industry

(30) Priorité: 30.03.2000 FR 0004036
(43) Date de publication de la demande: 04.10.2001
(73) Titulaire: Arkema, 92800 Puteaux (FR); l'Industrielle de Chimie Elaborée Française (LICEF S.A.), 38280 Villette d'Anthon (FR)
(72) Inventeur: Lallier, Jean-Pierre, 95220 Herblay (FR); Galea, Christian, 69003 Lyon (FR)

(56) Documents cités:
- EP-A- 0 573 339
- WO-A-94/24216
- WO-A-96/30453

## Description

La présente invention porte sur une composition décapante, utilisable notamment dans le domaine du bâtiment, en particulier pour le décapage des revêtements organiques extérieurs tels que les imperméabilités de façade et les films minces. Les imperméabilités de façade, d'aspect caoutchouteux sont imperméables à l'air, à l'oxygène et à la vapeur d'eau et sont à base de polymères acrylique ou styrène-acrylique.

Dans le secteur du bâtiment, la plupart des décapants pour peintures sont à base de chlorure de méthylène additivé de méthanol. Ils peuvent être épaissis par des composés cellulosiques et peuvent contenir une charge minérale.

Cependant, on cherche de plus en plus à remplacer le chlorure de méthylène en raison de ses très fortes volatilité et nocivité. Les produits de remplacement du mélange synergique chlorure de méthylène-méthanol existent, mais il sont, en général, beaucoup plus chers et entrent à au moins 90 % en poids de la constitution de la formulation. Les 10 % restants sont constitués par un épaississant (le plus souvent choisi parmi les dérivés cellulosiques ou acryliques), lui-même, généralement encore plus cher que les solvants et les divers additifs : activateur, tensio-actif, inhibiteur de corrosion.

La présente invention a donc pour objet une composition décapante, utilisable notamment dans le domaine du bâtiment, en particulier pour le décapage des imperméabilités de façade et des films minces, caractérisée en ce qu'elle comprend :
(A) au moins un ester dibasique,
(B) au moins un solvant aprotique dipolaire,
(C) au moins un co-solvant, et
(D) une association d'agents de ramollissement.

La composition selon l'invention peut comprendre, pour 100 parties en poids de (A) + (B) + (C) + (D) :
- 5 à 50, en particulier 10 à 45, parties en poids de (A) ;
- 10 à 60, en particulier 25 à 55, parties en poids de (B) ;
- 10 à 50, en particulier 15 à 40, parties en poids de (C) ; et
- 0,3 à 10, en particulier 3 à 10, parties en poids de (D).

Le ou les esters dibasiques (A) sont notamment choisis parmi les esters dibasiques aliphatiques, en particulier les diesters d'alkyle en C1-C4 d'un ou plusieurs acides dibasiques aliphatiques en C4-C6. On peut citer en particulier le succinate de diméthyle, le glutarate de diméthyle, l'adipate de diméthyle et leurs mélanges;

Les solvants aprotiques dipolaires (B) sont avantageusement choisis parmi le diméthylsulfoxyde, la N-méthylpyrrolidone, le carbonate de propylène, le diméthylformamide, l'acétonitrile, la N-méthylmorpholine, la butyrolactone et le diméthylacétamide. Le diméthylsulfoxyde et la N-méthyl pyrrolidone sont préférés.

Comme co-solvants (C), on choisira de préférence des monoalcoxybenzènes tels que l'anisole et le phénétole. On utilisera tout particulièrement, le phénétole.

Selon la présente invention, on désigne par association d'agent de ramolissements un mélange comprenant les composés suivants : un lactate d'alkyle tel que le lactate d'éthyle ou le lactate de butyle ; la triméthylcyclohexanone ou l'isophorone; l'acétate de cyclohexyle ; une éthanolamine telle que la monoéthanolamine ou la diéthanolamine, la méthyldiéthanolamine ; le 1,2-, ou le 1,3- ou le 1,4-diméthoxybenzène et de l'eau.

Chaque agent de ramollissement peut être utilisé à raison d'au moins 0,05 partie en poids et, de préférence, 0,5 partie en poids pour 100 parties en poids de (A) + (B) + (C) + (D).

La composition décapante selon l'invention peut comprendre en outre :
- au moins une charge inorganique à caractère épaississant, à raison notamment de 20 à 60 parties en poids, en particulier de 25 à 50 parties en poids pour 100 parties en poids de (A) + (B) + (C) + (D), et/ou
- au moins un épaississant cellulosique, à raison notamment de 0,05 à 1,5 partie en poids, en particulier de 0,5 à 1,1 partie en poids, pour 100 parties en poids de (A)+(B)+(C)+(D) ; et/ou
- au moins un agent dispersant, à raison notamment de 0,1 à 10 parties en poids, en particulier de 0,5 à 2 parties en poids, pour 100 parties en poids de (A) + (B) + (C) + (D).

Par charge inorganique à caractère épaississant, on entend une poudre inorganique, naturelle ou synthétique pouvant conduire à des formulations dont la viscosité est de l'ordre de 6 000 mPa.s à 20 tours/min ou 2 000 mPa.s à 100 tours/min.

La ou les charges inorganiques ont, d'une manière générale, une granulométrie moyenne comprise entre 0,1 et 200 µm, plus particulièrement entre 1 et 100 *µ*m. Une granulométrie plus fine permet d'obtenir la même viscosité en utilisant moins de charge, ce qui n'est pas économiquement souhaitable.

A titre d'exemple de charges inorganiques, on peut citer le carbonate de calcium, la silice, le phosphite de calcium, l'hydroxyde de calcium (Ca(OH)₂), l'argile, la bentonite.

Comme exemple d'épaississant cellulosique, on peut citer le METHOCELL 311 commercialisé par la Société "DOW CHEMICAL Co.", dont le procédé d'obtention est décrit dans le brevet américain US-A-3 388 082 intitulé "Hydroxypropyl methyl cellulose ethers".

Comme exemple d'agent dispersant, on peut citer l'ester phosphorique acide du 2-éthylhexanol, commercialisé par la Société "CECA" sous la dénomination "BEYCOSTAT AO81".

La composition décapante selon l'invention peut en outre contenir au moins un agent lui procurant une odeur agréable, à raison notamment de 1 à 10 parties en poids pour 100 parties en poids de (A) + (B) + (C) + (D).

La composition décapante de l'invention s'est avérée être très intéressante ; en effet après qu'on l'ait appliquée puis laissé agir pendant quelques dizaines de minutes, il suffit de pousser les lambeaux secs à l'aide d'une spatule de peintre. On évite des résidus humides, collants, toujours difficiles à éliminer et à traiter, et on obtient la plupart du temps un substrat propre, tel que mur en béton ou en brique.

Les exemples suivants illustrent la présente invention. Dans ces exemples, les ingrédients utilisés sont les suivants :
◆ Ester dibasique :
   DBE= ester dibasique ayant la composition suivante (en % en poids) : adipate diméthyle/glutarate de diméthyle/succi-nate de diméthyle : 15/62/23, commercialisé par la Société "RHONE-POULENC" sous la dénomination "RPDE".
   Solvant aprotique polaire : DMSO
   Co-solvant : Phénétole
   Agents de ramollissements : triméthylcyclohexanone, lactate d'éthyle, cyclohexyl acétate, eau, diéthanolamine, 1,4-diméthoxybenzène.
Additifs :
   Epaississant cellulosique = épaississant cellulosique commercialisé par la Société "DOW CHEMICAL Co." sous la dénomination "METHOCELL 311",
   Agent dispersant = ester phosphorique acide du 2-éthylhexanol, commercialisé sous la dénomination "BEYCOSTAT A081",
   CaHPO₃ = phosphite de calcium naturel, produit par la Société "CECA".

Dans ces exemples, toutes les proportions citées sont en parties en poids.

### EXEMPLE DE PREPARATION 1 :

On a préparé la formulation suivante en mélangeant les constituants à température ambiante.
- DMSO 21,9
- RDPE 43,8
- Phénétole 28,4
- Association d'agents de ramollissement 4,5
   constituée par : triméthylcyclohexanone (0,75), lactate d'éthyle (0,75), acétate de cyclohexyle (0,75), eau (0,75), diéthanolamine (0,75) et 1,4-diméthoxybenzène (0,75) ;
- METHOCELL 311 1

### EXEMPLE DE PREPARATION 2 :

Toute la préparation se fait à température ambiante (25°C) et sous agitation (environ 400 tours /min), avec, de préférence, une turbine permettant une dispersion de solides dans les liquides. Les solvants sont introduits d'abord. Puis on ajoute le phosphite de calcium et l'épaississant cellulosique.
- DMSO 15
- RDPE 30
- Phénétole 19,5
- Association d'agents de ramollissements 3
   constituée par : triméthylcyclohexanone (0,5), lactate d'éthyle (0,5), acétate de cyclohexyle (0,5), eau (0,5), diéthanolamine (0,5) et 1,4-diméthoxybenzène (0,5) ;
- BEYCOSTAT A81 1
- METHOCELL 311 0,7
- Phosphite de calcium 30,8

### EXEMPLE D'APPLICATION 1 :

Cet exemple d'application concerne le décapage d'une imperméabilité de façade d'épaisseur estimée à 700-800 µm sur support béton lisse. L'application est faite à la patte de lapin sur façade extérieure (T=12°C). Après un temps de pose de 30 minutes, les préparations 1 et 2 conduisent à une élimination aisée au scraper en donnant des lambeaux secs et laissant place à un support prêt à peindre. L'association d'agents de ramollissements donne ainsi d'excellents résultats sur des imperméabilités. Le temps d'attente utile à la diffusion du décapant est très faible (30 à 40 minutes environ) : on peut donc dire qu'il n'existe pas de réelle différence pratique au niveau des décapages d'imperméabilité sur béton entre cette formule et une formule chlorée traditionnelle, si ce n'est un temps d'ouverture beaucoup plus important, ce qui est bénéfique.

### EXEMPLE D'APPLICATION 2 :

Cet exemple d'application concerne le décapage d'un film mince sur support structuré. Dans ce cas, les deux formules ont conduit aux mêmes performances. La différence avec l'exemple précédent est qu'on élimine le film à la pression. On n'observe pas d'effet de mottage, particulièrement lorsqu'on utilise la préparation 2 (chargée).

## Revendications

1. Composition décapante, utilisable notamment dans le domaine du bâtiment, en particulier pour le décapage des imperméabilités de façade et des films minces **caractérisée en ce qu'**elle comprend :
(A) au moins un ester dibasique,
(B) au moins un solvant aprotique dipolaire,
(C) au moins un co-solvant, et
(D)une association d'agents de ramollissement comprenant :
• un lactate d'alkyle tel que le lactate d'éthyle ou le lactate de butyle,
• de la triméthylcyclohaxanone ou de l'isophorone,
• de l'acétate de cyclohexyle,
• une éthanolamine tel que la monoéthanolamine, la diéthanolamine ou la méthyldiéthanol-amine,
• le 1,2- ou le 1,3- ou le 1,4-diméthoxybenzène
• et de l'eau.

2. Composition décapante selon la revendication 1, **caractérisée en ce qu'**elle comprend, pour 100 parties en poids de (A)+(B)+(C)+(D) :
- 5 à 50 parties en poids de (A),
- 10 à 60 parties en poids de (B),
- 10 à 50 parties en poids de (C), et
- 0,3 à 10 parties en poids de (D).

3. Composition décapante selon la revendication 2, **caractérisée en ce qu'**elle comprend, pour 100 parties en poids de (A) + (B) + (C) + (D):
- 10 à 45 parties en poids de (A),
- 25 à 55 parties en poids de (B),
- 15 à 40 parties en poids de (C), et
- 3 à 10 parties en poids de (D).

4. Composition décapante selon l'une des revendications 1 à 3, **caractérisée en ce que** les esters dibasiques (A) sont choisis parmi les esters dibasiques aliphatiques, en particulier les diesters d'alkyle en C₁-C₄ d'un ou plusieurs acides dibasiques aliphatiques en C₄-C₆.

5. Composition décapante selon la revendication 4, **caractérisée en ce que** le ou les esters dibasiques (A) sont choisis parmi le succinate de diméthyle, le glutarate de diméthyle, l'adipate de diméthyle et leurs mélanges.

6. Composition décapante selon l'une des revendications 1 à 5, **caractérisée en ce que** le ou les solvants aprotiques dipolaires (B) sont choisis parmi le diméthylsulfoxyde, la N-méthylpyrrolidone, le carbonate de propylène, le diméthylformamide, l'acétonitrile, la N-méthylmorpholine, la -butyrolactone et le diméthylacétamide.

7. Composition décapante selon l'une des revendications 1 à 6, **caractérisée en ce que** le co-solvant (C) est l'anisole ou le phénétole.

8. Composition décapante selon l'une quelconque des revendications 1 à 7, **caractérisée en ce que** l'association d'agents de ramollissements est un mélange constitué par le lactate d'éthyle, la triméthylcyclohexanone, l'acétate de cyclohexyle, la diéthanolamine, le 1,4-diméthoxybenzène, l'eau.

9. Composition décapante selon l'une des revendications 1 à 8, **caractérisée en ce que** chaque composé de l'association des agents de ramollissement est présent à raison d'au moins 0,05 partie en poids pour 100 parties en poids de (A)+(B)+(C)+(D).

10. **Composition décapante selon l'une des revendications 1 à 9, caractérisée en ce qu'**elle contient en outre au moins un épaississant cellulosique à raison de 0,05 à 1,5 partie en poids, en particulier de 0,5 à 1,1 partie en poids, pour 100 parties en poids de (A)+(B)+(C)+(D), et/ou au moins une charge inorganique, à raison de 20 à 60 parties en poids, en particulier de 25 à 50 parties en poids, pour 100 parties en poids de (A)+(B)+(C)+(D) et/ou au moins un agent dispersant, à raison de 0,1 à 10 parties pour 100 parties en poids de (A)+(B)+(C)+(D).

11. Composition décapante selon la revendication 10, **caractérisée en ce que** ragent dispersant est l'ester phosphorique acide du 2-éthylhexanol.

12. Composition décapante selon la revendication 10 ou 11, **caractérisée en ce que la** charge inorganique est le phosphite de calcium.

13. Composition décapante selon l'une des revendications 1 à 12, **caractérisée par le fait qu'**elle contient en outre au moins un agent procurant une odeur agréable à ladite composition, à raison notamment de 1 à 10 parties en poids, pour 100 parties en poids de (A)+(B)+(C)+(D).

## Claims

1. Stripping composition which can be used in particular in the construction field, especially for the stripping of exterior waterproof coatings and thin films, **characterized in that** it comprises:
(A) at least one dibasic ester,
(B) at least one dipolar aprotic solvent,
(C) at least one cosolvent, and
(D) a combination of softening agents comprising
• an alkyl lactate, such as ethyl lactate or butyl lactate,
• trimethylcyclohexanone or isophorone,
• cyclohexyl acetate,
• an ethanolamine, such as monoethanolamine or diethanolamine or methyldiethanolamine,
• 1,2- or 1,3- or 1,4-dimethoxybenzene
• and water.

2. Stripping composition according to Claim 1, **characterized in that** it comprises, per 100 parts by weight of (A) + (B) + (C) + (D):
- 5 to 50 parts by weight of (A),
- 10 to 60 parts by weight of (B),
- 10 to 50 parts by weight of (C), and
- 0.3 to 10 parts by weight of (D).

3. Stripping composition according to Claim 2, **characterized in that** it comprises, per 100 parts by weight of (A) + (B) + (C) + (D):
- 10 to 45 parts by weight of (A),
- 25 to 55 parts by weight of (B),
- 15 to 40 parts by weight of (C), and
- 3 to 10 parts by weight of (D).

4. Stripping composition according to one of Claims 1 to 3, **characterized in that** the dibasic esters (A) are chosen from aliphatic dibasic esters, in particular C₁-C₄ alkyl diesters of one or more C₄-C₆ aliphatic dibasic acids.

5. Stripping composition according to Claim 4, **characterized in that** the dibasic ester or esters (A) are chosen from dimethyl succinate, dimethyl glutarate, dimethyl adipate and their mixtures.

6. Stripping composition according to one of Claims 1 to 5, **characterized in that** the dipolar aprotic solvent or solvents (B) are chosen from dimethyl sulphoxide, N-methylpyrrolidone, propylene carbonate, dimethylformamide, acetonitrile, N-methylmorpholine, butyrolactone and dimethylacetamide.

7. Stripping composition according to one of Claims 1 to 6, **characterized in that** the cosolvent (C) is anisole or phenetole.

8. Stripping composition according to one of Claims 1 to 7, **characterized in that** the combination of softening agents is a mixture composed of ethyl lactate, trimethylcyclohexanone, cyclohexyl acetate, diethanolamine, 1,4-dimethoxybenzene and water.

9. Stripping composition to one of Claims 1 to 8, **characterized in that** each compound of the combination of softening agents is used in a proportion of at least 0.05 part by weight per 100 parts by weight of (A) + (B) + (C) + (D).

10. Stripping composition according to one of Claims 1 to 9, **characterized in that** it additionally comprises at least one cellulose thickener in a proportion of 0.05 to 1.5 parts by weight, in particular of 0.5 to 1.1 parts by weight, per 100 parts by weight of (A) + (B) + (C) + (D) and/or at least one inorganic filler in a proportion of 20 to 60 parts by weight, in particular of 25 to 50 parts by weight, per 100 parts by weight of (A) + (B) + (C) + (D) and/or at least one dispersing agent, in a proportion of 0.1 to 10 parts per 100 parts by weight of (A) + (B) + (C) + (D) .

11. Stripping composition according to Claim 10, **characterized in that** the dispersing agent is the acidic phosphoric ester of 2-ethylhexanol.

12. Stripping composition according to Claim 10 or 11, **characterized in that** the inorganic filler is calcium phosphite.

13. Stripping composition according to one of Claims 1 to 12, **characterized in that** it additionally comprises at least one agent which provides a pleasant smell to the said composition, in a proportion in particular of 1 to 10 parts by weight per 100 parts by weight of (A) + (B) + (C) + (D).

## Patentansprüche

1. Abbeizmittelzusammensetzung, die insbesondere auf dem Bausektor verwendet werden kann, insbesondere zum Abbeizen von undurchlässigen Fassadenbeschichtungen und dünnen Filmen, **dadurch gekennzeichnet, daß** sie:
(A) mindestens einen dibasischen Ester,
(B) mindestens ein dipolares aprotisches Lösungsmittel,
(C) mindestens ein Cosolvens,
(D) eine Weichmacherkombination, enthaltend:
• ein Milchsäurealkylester wie Milchsäureethylester oder Milchsäurebutylester,
• Trimethylcyclohexanon oder Isophoron,
• Essigsäurecyclohexylester,
• ein Ethanolamin wie Monoethanolamin, Diethanolamin oder Methyldiethanolamin,
• 1,2-, 1,3- oder 1,4-Dimethoxybenzol,
• und Wasser,
enthält.

2. Abbeizmittelzusammensetzung nach Anspruch 1, **dadurch gekennzeichnet, daß** sie auf 100 Gewichtsteile (A) + (B) + (C) + (D):
- 5 bis 50 Gewichtsteile (A),
- 10 bis 60 Gewichtsteile (B),
- 10 bis 50 Gewichtsteile (C) und
- 0,3 bis 10 Gewichtsteile (D)
enthält.

3. Abbeizmittelzusammensetzung nach Anspruch 2, **dadurch gekennzeichnet, daß** sie auf 100 Gewichtsteile (A) + (B) + (C) + (D):
- 10 bis 45 Gewichtsteile (A),
- 25 bis 55 Gewichtsteile (B),
- 15 bis 40 Gewichtsteile (C) und
- 3 bis 10 Gewichtsteile (D)
enthält.

4. Abbeizmittelzusammensetzung nach einem der Ansprüche 1 bis 3, **dadurch gekennzeichnet, daß** die dibasischen Ester (A) unter aliphatischen dibasischen Estern, insbesondere C₁-C₄-Alkyldiestern einer oder mehrerer aliphatischer dibasischer C₄₋C₆-Säuren, ausgewählt sind.

5. Abbeizmittelzusammensetzung nach Anspruch 4, **dadurch gekennzeichnet, daß** der dibasische Ester (A) bzw. die dibasischen Ester (A) unter Bernsteinsäuredimethylester, Glutarsäuredimethylester, Adipinsäuredimethylester und Gemischen davon ausgewählt ist bzw. sind.

6. Abbeizmittelzusammensetzung nach einem der Ansprüche 1 bis 5, **dadurch gekennzeichnet, daß** das dipolare aprotische Lösungsmittel (B) bzw. die dipolaren aprotischen Lösungsmittel (B) unter Dimethylsulfoxid, N-Methylpyrrolidon, Propylencarbonat, Dimethylformamid, Acetonitril, N-Methylmorpholin, Butyrolacton und Dimethylacetamid ausgewählt ist bzw. sind.

7. Abbeizmittelzusammensetzung nach einem der Ansprüche 1 bis 6, **dadurch gekennzeichnet, daß** es sich bei dem Cosolvens (C) um Anisol oder Phenetol handelt.

8. Abbeizmittelzusammensetzung nach einem der Ansprüche 1 bis 7, **dadurch gekennzeichnet, daß** es sich bei der Weichmacherkombination um eine Mischung aus Milchsäureethylester, Trimethylcyclohexanon, Essigsäurecyclohexylester, Diethanolamin, 1,4-Dimethoxybenzol und Wasser handelt.

9. Abbeizmittelzusammensetzung nach einem der Ansprüche 1 bis 8, **dadurch gekennzeichnet, daß** die Weichmacherkombination in einer Menge von mindestens 0,5 Gewichtsteilen auf 100 Gewichtsteile (A) + (B) + (C) + (D) vorliegt.

10. Abbeizmittelzusammensetzung nach einem der Ansprüche 1 bis 9, **dadurch gekennzeichnet, daß** sie außerdem mindestens einen Celluloseverdicker in einer Menge von 0,05 bis 1,5 Gewichtsteilen und insbesondere 0,5 bis 1,1 Gewichtsteilen auf 100 Gewichtsteile (A) + (B) + (C) + (D), und/oder mindestens einen anorganischen Füllstoff in einer Menge von 20 bis 60 Gewichtsteilen und insbesondere 25 bis 50 Gewichtsteilen auf 100 Gewichtsteile (A) + (B) + (C) + (D), und/oder mindestens ein Dispergiermittel in einer Menge von 0,1 bis 10 Gewichtsteilen auf 100 Gewichtsteile (A) + (B) + (C) + (D) enthält.

11. Abbeizmittelzusammensetzung nach Anspruch 10, **dadurch gekennzeichnet, daß** es sich bei dem Dispergiermittel um den sauren Phosphorsäureester von 2-Ethylhexanol handelt.

12. Abbeizmittelzusammensetzung nach Anspruch 10 oder 11, **dadurch gekennzeichnet, daß** es sich bei dem anorganischen Füllstoff um Calciumphosphit handelt.

13. Abbeizmittelzusammensetzung nach einem der Ansprüche 1 bis 12, **dadurch gekennzeichnet, daß** sie außerdem mindestens ein Mittel, das der Zusammensetzung einen angenehmen Geruch verleiht, insbesondere in einer Menge von 1 bis 10 Gewichtsteilen auf 100 Gewichtsteile (A) + (B) + (C) + (D), enthält.
